# FASCICULE DE BREVET EUROPEEN

(11) **EP 0 517 556 B1**
(45) Date de publication et mention de la délivrance du brevet: **03.01.1996**
(21) Numéro de dépôt: 92401297.4
(22) Date de dépôt: 12.05.1992
(51) Int. Cl.: H04B 1/16, H04L 27/38

(54) **Procédé de démodulation de signaux RDS par voie numérique, et démodulateur mettant en oeuvre ce procédé**
Verfahren zur Demodulation von RDS-Signalen auf numerische Weise, und Demodulator zur Durchführung dieses Verfahrens
Method for demodulating RDS signals in a digital way, and demodulator to perform this method

(30) Priorité: 03.06.1991 FR 9106652
(43) Date de publication de la demande: 09.12.1992
(73) Titulaire: Etablissement Public Télédiffusion de France, F-75015 Paris (FR)
(72) Inventeur: Jean, Philippe, F-57000 Metz (FR); Henaux, Philippe, F-57000 Metz (FR)
(74) Mandataire: Rodhain, Claude

(56) Documents cités:
- DE-A- 3 743 213
- DE-A- 3 920 330
- US-A- 3 739 280
- US-A- 3 835 386

## Description

L'invention concerne un procédé de démodulation de signaux de type RDS, et un démodulateur de signaux de type RDS.

Le système RDS *(Radio Data System)* est un système de diffusion de données numériques sur une sous-porteuse d'un signal de radiodiffusion en modulation de fréquence, dont les spécifications ont été définies par l'Union européenne des radiocommunications.

Les données diffusées peuvent être de nature très variée (type et nom de l'émetteur, heure et date, etc., ou encore des informations de radiotexte) ; elles sont dérivées de la sous-porteuse au moyen d'un décodeur approprié comportant notamment un démodulateur qui extrait les données brutes (suite de bits de données) de cette sous-porteuse.

Plus précisément, le type de modulation employé en RDS est une modulation d'amplitude à deux bandes latérales avec suppression de porteuse et codage différentiel par des signaux biphases, la fréquence de la sous-porteuse étant de 57 kHz (valeur correspondant à l'harmonique 3 de la sous-porteuse du signal pilote stéréo à 19 kHz du signal radiodiffusé) et les bandes latérales étant situées à 1187,5 Hz de la fréquence centrale de la sous-porteuse.

Jusqu'à présent, la fonction de démodulation RDS est réalisée de façon analogique et par un composant spécifique (circuit intégré hybride). Les demandes de brevet allemand DE-A-39 20 330 et DE-A-37 43 213, entre autres, décrivent des récepteurs incorporant de tels démodulateurs opérant par voie analogique.

Du fait de son caractère spécifique, ce composant induit nécessairement un surcoût de réalisation, une consommation énergétique accrue et un encombrement supplémentaire, toutes contraintes allant à l'encontre de la tendance actuelle à la miniaturisation des circuits RDS, tout particulièrement dans le domaine des récepteurs de radio-messagerie, où la plus grande miniaturisation et l'autonomie la plus longue sont hautement souhaitables.

Le brevet US-A-3 835 386 divulgue un démodulateur de signaux binaires muni de moyens détecteurs d'enveloppe.

L'un des buts de la présente invention est de proposer un nouveau mode de démodulation RDS qui soit basé sur un concept numérique, et non plus sur un concept analogique comme cela était jusqu'à présent le cas.

L'avantage majeur d'une telle démodulation RDS par voie numérique est de pouvoir être effectuée par voie logicielle au moyen d'un microprocesseur - composant qui, en tout état de cause, préexiste à l'intérieur du récepteur pour assurer les fonctions aval de décodage des signaux numériques bruts.

On peut donc ainsi supprimer un circuit intégré spécialisé, affecté jusqu'à présent à la seule fonction de démodulation. Ceci, outre bien entendu la réduction d'encombrement et de coût, permet d'accroître l'autonomie du récepteur en faisant l'économie de la consommation nécessaire, jusqu'à présent, à la fonction de démodulation.

L'invention a donc pour objet la démodulation de signaux RDS, c'est-à-dire de signaux dans lesquels, notamment, une sous-porteuse d'un signal radiodiffusé est modulée par un signal incident porteur de données numériques, cette modulation étant une modulation d'amplitude de la sous-porteuse par un signal périodique de fréquence prédéterminée et dont l'amplitude du signal périodique à la demi-période varie par rapport à un seuil donné.

Le procédé de l'invention est caractérisé par les étapes énoncées dans la revendication principale. Un certain nombre de caractéristiques avantageuses de mise en oeuvre de ce procédé sont énoncées dans les revendications 2 à 5.

L'invention a également pour objet un démodulateur de signaux du type RDS précité, c'est-à-dire un circuit recevant en entrée une sous-porteuse modulée d'un signal radiodiffusé et délivrant en sortie un signal binaire de données, comprenant les éléments énoncés dans la revendication 6.

On va maintenant décrire plus en détail l'invention, en référence aux dessins annexés.
La figure 1 montre, de façon schématique, la structure du circuit de l'invention.
La figure 2 montre la manière dont sont codées les données binaires RDS dans le signal tel qu'il apparaît en entrée des circuits.
La figure 3 est homologue de la figure 2, après extraction de l'enveloppe positive du signal.
La figure 4 montre l'algorithme de recherche de synchronisation sur le signal incident.
La figure 5 montre l'algorithme de démodulation, permettant d'extraire les bits de données de l'information RDS.

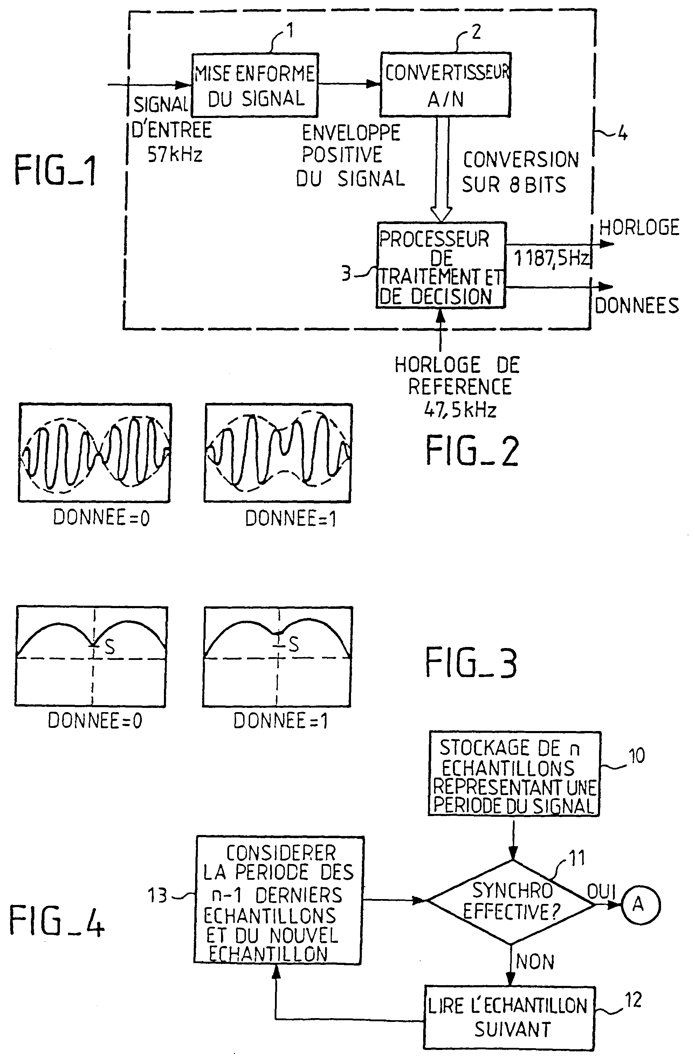

Sur la figure 1, on a représenté sous forme de schéma par blocs le circuit de l'invention, qui comporte essentiellement un circuit analogique de mise en forme du signal 1, recevant en entrée la sous-porteuse à 57 kHz modulée par les signaux RDS et délivrant en sortie l'enveloppe positive, c'est-à-dire le signal modulant, contenant les données RDS. Ce signal modulant est appliqué à un convertisseur analogique/numérique 2 réalisant, de façon en elle-même classique, l'échantillonnage et la conversion du signal en une valeur numérique (par exemple, sur 8 bits). Enfin, il est également prévu un processeur numérique 3 assurant la fonction de démodulation, c'est-à-dire la reconnaissance des symboles binaires successifs véhiculés par la porteuse modulée.

Cet ensemble délivre en sortie, à partir de la sous-porteuse à 57 kHz modulée, d'une part les données RDS sous forme numérique brute (succession de bits de données) et d'autre part un signal synchrone d'horloge de cadencement de ces données à 1187,5 Hz, généré d'après le flux de données démodulé, ce qui permet d'être sûr de son parfait synchronisme.

L'ensemble des fonctions des blocs 1, 2 et 3 peut être réalisé par un seul et même composant tel qu'un microcalculateur intégré, avec ses circuits de traitement numérique du signal assurant l'interfaçage entre la partie analogique et la partie numérique.

Le processeur 3 utilisé pour la démodulation selon l'invention, c'est-à-dire pour l'extraction des données binaires brutes, peut être également utilisé pour assurer le décodage de ces données numériques, c'est-à-dire leur regroupement en mots, la sélection des informations pertinentes, la conversion du format de celles-ci, etc.

Les figures 2 et 3 illustrent le mode de modulation de la sous-porteuse : cette modulation, typique des signaux RDS, est une modulation de phase dans laquelle la sous-porteuse (visible figure 2) est modulée en amplitude par un signal périodique à la même cadence que le flux de données binaires, ce signal modulant étant lui-même soumis à une modulation par les données binaires RDS par variation de l'amplitude du signal à la demi-période. Ainsi, comme illustré figure 2, si la donnée binaire est un '0', l'amplitude du signal à la demi-période est nulle (en pratique, inférieure à un seuil donné) tandis que, si la donnée transmise est un '1', l'amplitude du signal à la demi-période est non nulle (en pratique, supérieure au seuil prédéterminé).

La figure 3 montre les mêmes signaux que sur la figure 2, mais après extraction de l'enveloppe positive du signal, c'est-à-dire après suppression de la sous-porteuse à 57 kHz et conservation des seules bandes latérales à 1187,5 Hz ; le seuil par rapport auquel on compare l'amplitude du signal à la demi-période a été référencé S.

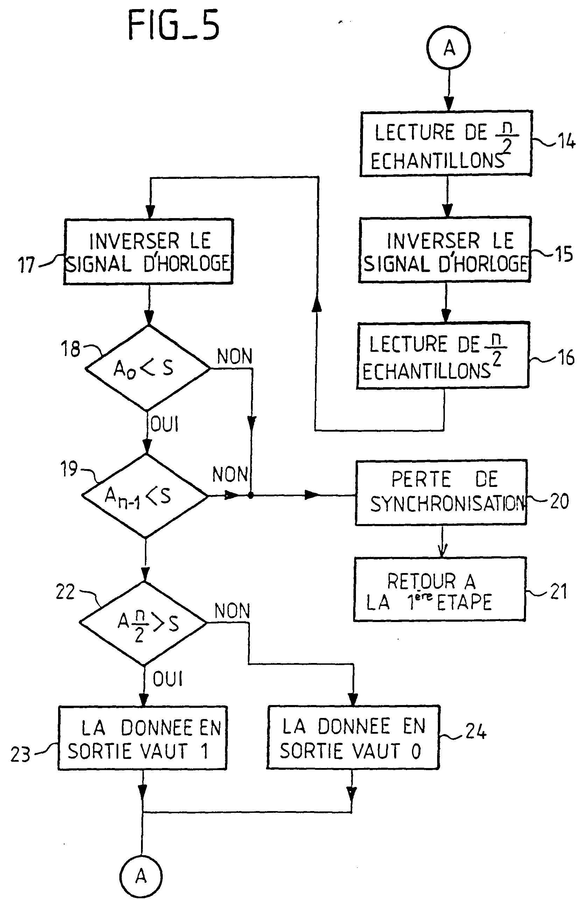

Le procédé de l'invention est illustré par les organigrammes des figures 4 et 5 : la figure 4 correspond aux étapes préalables de synchronisation des périodes du signal d'entrée sur les périodes d'échantillonnage, tandis que la figure 5 correspond aux étapes d'extraction proprement dite des bits de données.

Pour réaliser la synchronisation (figure 4), on commence (bloc 10) par mémoriser une série de n échantillons successifs représentant une période du signal d'entrée à 1187,5 Hz. On recherche alors si cette période est une période quelconque ou une période synchronisée (test 11), c'est-à-dire si, en d'autres termes, elle correspond ou non, dans la fenêtre temporelle considérée, à un signal tel que celui de la figure 3.

On considérera qu'il y a synchronisation effective (c'est-à-dire que la réponse au test 11 est positive) lorsque la période du signal présente cumulativement les trois caractéristiques suivantes : (i) l'amplitude en début de période (échantillon initial des n échantillons) est inférieure au seuil S, (ii) l'amplitude en fin de période (échantillon terminal) est également inférieure au seuil, et (iii) l'amplitude en milieu de période (échantillon central) est, en revanche, supérieure au seuil. En d'autres termes, on recherche un signal tel que celui illustré à droite, sur la figure 3.

Si la synchronisation est effective, on peut passer à la démodulation proprement dite.

Dans le cas contraire, on lit l'échantillon suivant (bloc 12), que l'on adjoint aux n-1 échantillons précédents (bloc 13), et l'on effectue ànouveau le test 11 sur ce nouveau jeu de n échantillons, et ainsi de suite jusqu'à détection d'une synchronisation effective.

Une fois cette synchronisation réalisée, on peut alors procéder à l'extraction des informations binaires, par mise en oeuvre de l'algorithme de décision représenté figure 5.

Tout d'abord on fera abstraction des blocs 15 et 17.

L'algorithme commence par la lecture de n échantillons successifs (blocs 14 et 16), et le jeu d'échantillons ainsi constitué est analysé par les tests 18 à 22.

En premier lieu (test 18), on vérifie que le niveau de l'échantillon initial est bien inférieur au seuil (test 18), de même que celui de l'échantillon final (test 19). Si tel n'est pas le cas, on doit considérer qu'il y a perte de synchronisation (bloc 20), impliquant un retour immédiat (bloc 21) à l'algorithme de recherche de synchronisation précédemment exposé en référence à la figure 4.

Dans le cas contraire, c'est-à-dire si le maintien de la synchronisation est avéré par les tests 18 et 19, on examine alors (test 22) l'échantillon central du jeu de n échantillons précédemment lu et, selon que celui-ci est supérieur au seuil (bloc 23) ou inférieur au seuil (bloc 24), on décide que le bit de données correspondant est un '1' ou un '0', respectivement, et ce résultat est délivré en sortie pour traitement ultérieur.

- On réitère alors le processus par lecture des n échantillons suivants (blocs 14 et 16), vérification du maintien de la synchronisation, etc.

Très avantageusement, le seuil S n'est pas un seuil fixe, déterminé une fois pour toute, mais un seuil adaptatif, variable dynamiquement en fonction de l'amplitude maximale de l'enveloppe du signal, c'est-à-dire de l'amplitude que l'on peut mesurer à T/4 et 3T/4, T étant la durée de la période ; le seuil est alors un seuil relatif remis à jour régulièrement, ce qui permet de compenser les variations d'amplitude longues du signal à analyser. On peut aussi procéder à partir des échantillons successifs de l'une ou de chacune des demi-périodes du signal, en recherchant de proche en proche la valeur maximale d'échantillon et en déterminant le seuil à partir de la valeur ainsi trouvée (par exemple en prenant comme valeur de seuil 1/32 (ou 1/16, ou 1/64, etc.) de la valeur maximale ainsi trouvée.

Par ailleurs, l'algorithme de l'invention permet de générer de façon très simple, et concurremment à l'analyse des échantillons, un signal d'horloge de période égale à la période du signal à analyser (c'est-à-dire correspondant à une fréquence de 1187,5 Hz) et, surtout, synchronisé sur celui-ci, c'est-à-dire que l'un des fronts montant ou descendant du signal d'horloge sera généré à l'instant exact de la délivrance de la donnée binaire par le démodulateur numérique.

A cet effet, il suffit de lire les n échantillons de chaque période en deux temps, c'est-à-dire que l'on lit tout d'abord n/2 échantillons (bloc 14), puis l'on génère un front du signal d'horloge (bloc 15), puis on lit les n/2 échantillons suivants (bloc 16), après quoi l'on génère enfin le front inverse du signal d'horloge (bloc 17). Les échantillons en question ayant été préalablement synchronisés par l'algorithme illustré figure 4, on génère ainsi un signal d'horloge parfaitement synchrone, sans recours à aucun composant ni algorithme supplémentaire.

## Revendications

1. Un procédé de démodulation de signaux de type RDS, dans lesquels une sous-porteuse d'un signal radiodiffusé est modulée par un signal incident porteur de données numériques, cette modulation étant une modulation d'amplitude de la sous-porteuse par un signal périodique de fréquence prédéterminée et dont l'amplitude du signal périodique à la demi-période varie par rapport à un seuil (s) donné,
procédé caractérisé par les étapes suivantes:
(a) échantillonnage (2) du signal incident à n fois ladite fréquence prédéterminée,
(b) synchronisation (11) de ces échantillons sur le signal incident, par recherche, pour chaque série de n échantillons successifs acquis, de l'échantillon correspondant à un début de période dudit signal périodique,
(c) analyse (18, 19, 22) cette série de n échantillons ainsi synchronisée, pour :
. délivrer (23) en sortie un '1' si la valeur de l'échantillon central de cette série est supérieure audit seuil, ou
. délivrer (24) en sortie un '0' dans le cas contraire, et
(d) acquisition des n échantillons suivants (14-16) du signal incident et retour à l'étape (c).

2. Le procédé de la revendication 1, dans lequel l'étape (b) comporte les sous-étapes suivantes :
(b1) mémorisation (10) d'une série de n échantillons successifs du signal incident,
(b2) analyse (18, 19, 22), parmi ces échantillons, de la valeur de l'échantillon initial, de l'échantillon central et de l'échantillon final,
(b3) passage à l'étape (c) si l'échantillon central est supérieur audit seuil (s) et si les échantillons initial et final (18, 19) sont tous deux inférieurs à ce seuil, ou
(b4) dans le cas contraire (24), acquisition d'un nouvel échantillon et adjonction de celui-ci aux n-1 derniers échantillons de la série d'échantillons obtenue à l'étape (b1), et exécution de l'étape (b3) sur la base de cette nouvelle série de n échantillons.

3. Le procédé de la revendication 1, dans lequel l'étape (c) comporte en outre une sous-étape préalable de détection de perte de synchronisation, (20) (imposant un retour à l'étape (a) si l'échantillon initial ou l'échantillon final dudit jeu de n échantillons est inférieur audit seuil (18, 19).

4. Le procédé de la revendication 1, dans lequel, simultanément à l'acquisition des échantillons du signal incident, on délivre en sortie un signal d'horloge de données par génération d'un front d'impulsion (15, 17) après acquisition des n/2 premiers échantillons et des n/2 derniers échantillons de chaque série de n échantillons synchronisés.

5. Le procédé de la revendication 1, dans lequel l'étape (c) comprend en outre une étape préalable de détermination dynamique dudit seuil, qui est déterminé en fonction de l'amplitude de l'échantillon de plus grande valeur parmi les n/2 premiers échantillons de ladite série.

6. Un démodulateur (4) de signaux de type RDS, recevant en entrée une sous-porteuse d'un signal radiodiffusé modulée par un signal incident porteur de données numériques, cette modulation étant une modulation d'amplitude de la sous-porteuse par un signal périodique de fréquence prédéterminée et dont l'amplitude du signal périodique à la demi-période varie par rapport à un seuil (s) donné, et délivrant en sortie un signal binaire de données,
caractérisé en ce qu'il comprend :
- des moyens (2) pour échantillonner le signal incident à n fois ladite fréquence prédéterminée ;
- des moyens (3) pour synchroniser les échantillons du signal incident, par recherche, pour chaque série de n échantillons successifs acquis, de l'échantillon correspondant à un début de période dudit signal périodique,
- des moyens (3) d'analyse de cette série de n échantillons ainsi synchronisée, pour :
. délivrer en sortie un '1' si la valeur de l'échantillon central de cette série est supérieure audit seuil, ou
. délivrer en sortie un '0' dans le cas contraire, et
- des moyens d'acquisition (3) des n échantillons suivants du signal incident.

7. Le démodulateur selon la revendication 6, caractérisé en ce qu'il comprend en outre des moyens détecteur d'enveloppe (1), pour extraire de la sous-porteuse modulée ledit signal périodique.

8. Le démodulateur selon la revendication 6, caractérisé en ce que lesdits moyens pour échantillonner le signal incident comprennent un convertisseur analogique/numérique (2).

9. Le démodulateur selon la revendication 6, caractérisé en ce que lesdits moyens pour synchroniser les échantillons du signal incident, lesdits moyens d'analyse et d'acquisition comprennent un processeur numérique (3).

10. Le démodulateur selon la revendication 9 dans lequel le processeur numérique (3) délivre également en sortie un signal d'horloge de données cadencé sur la délivrance des valeurs binaires en sortie.

## Patentansprüche

1. Verfahren zur Demodulation von RDS-Signalen, bei dem ein Hilfsträger eines Rundfunksignals durch ein Eingangssignal moduliert wird, welches digitale Daten trägt, wobei es sich bei der Modulation um eine Amplitudenmodulation des Hilfsträgers durch ein periodisches Signal mit vorgegebener Frequenz handelt, und wobei die Amplitude des periodischen Signals bei der halben Periode im Verhältnis zu einem gegebenen Schwellenwert (5) variiert;
das Verfahren ist durch die folgenden Schritte gekennzeichnet:
(a) Abtastung (2) des Eingangssignals mit dem n-fachen der vorgegebenen Frequenz,
(b) Synchronisierung (11) dieser Abtastwerte mit dem Eingangssignal durch Suche, für jede Serie von n erfaßten aufeinanderfolgenden Abtastwerten, des Abtastwertes der dem Periodenanfang des periodischen Signals entspricht,
(c) Analyse (18, 19, 22) dieser derart synchronisierten Reihe von n Abtastwerten, um folgendes zu bewirken:
. Anlegen einer '1' am Ausgang (23), wenn der mittlere Abtastwert dieser Reihe größer ist als der Schwellenwert oder
. andernfalls, Anlegen einer '0' am Ausgang (24) sowie
(d) Gewinnung der n nachfolgenden Abtastwerte (14 - 16) des ankommenden Signals und Rückkehr zum Schritt (c).

2. Verfahren gemäß Anspruch 1, wobei der Schritt (b) die folgenden Unterschritte umfaßt:
(b1) Speichern (10) einer Reihe von n aufeinanderfolgenden Abtastwerten des Eingangssignals,
(b2) Analyse, unter den abgetasteten Werten (18, 19, 22), des Wertes des anfänglichen, des zentralen und des letzten Abtastwertes,
(b3) Übergang zum Schritt (c), wenn der zentrale Abtastwert größer als der Schwellenwert (5) ist und der erste und der letzte Abtastwert (18, 19) beide kleiner als dieser Schwellenwert sind oder
(b4) andernfalls (24), Gewinnung eines neuen Abtastwertes und Zugabe dieses Wertes zu den n-1 letzten Abtastwerten der Serie solcher Werte, die im Unterschritt (b1) gewonnen wurden, und Ausführen des Unterschritts (b3) auf der Grundlage dieser neuen Reihe von n Abtastwerten,

3. Verfahren gemäß Anspruch 1, wobei der Schritt (c) außerdem einen vorausgehenden Unterschritt für das Erfassen des Synchronisationsverlustes (20) umfaßt, der die Rückkehr zum Schritt (a) erzwingt, wenn der anfängliche oder der letzte Abtastwert des Satzes von n Abtastwerten kleiner als der Schwellenwert (18, 19) ist.

4. Verfahren gemäß Anspruch 1, in dem gleichzeitig mit der Gewinnung der Abtastwerte des Eingangssignals ein Datentaktgebersignal an den Ausgang durch Erzeugung einer lmpulsfront (15, 17) angelegt wird, nach Gewinnung der n/2 ersten und der n/2 letzten Abtastwerte einer jeden Serie von n synchronisierten Abtastwerten.

5. Vefahren gemäß Anspruch 1, wobei der Schritt (c) außerdem einen vorhergehenden Schritt für die dynamische Festlegung des Schwellenwertes umfaßt, der als Funktion der Amplitude des größeren Abtastwertes unter den n/2 ersten Abtastwerten der Serie festgelegt wird.

6. Demodulator (4) für RDS-Signale, der am Eingang einen Hilfsträger eines Funksignals empfängt, das durch ein Eingangssignal moduliert wird, welches digitale Daten trägt, wobei es sich bei der Modulation um eine Amplitudenmodulation des Hilfsträgers durch ein periodisches Signal vorgegebener Frequenz handelt, und wobei die Amplitude des periodischen Signals bei der halben Periode im Verhältnis zu einem gegebenen Schwellenwert (5) variiert, und der am Ausgang ein binäres Datensignal herausgibt,
dadurch gekennzeichnet, daß er folgendes umfaßt:
- Mittel (2) für das Abtasten des Eingangssignals beim n-fachen der vorgegebenen Frequenz;
- Mittel (3) zum Synchronisieren der Abtastwerte des Eingangssignals durch Suchen des Abtastwertes, der einem Periodenanfang des periodischen Signals entspricht, für jede Serie von n aufeinanderfolgenden gewonnenen Abtastwerten,
- Mittel (3) zum Analysieren dieser Serie von n derart synchronisierten Abtastwerten, um:
. eine '1' am Ausgang anzulegen, wenn der zentrale Abtastwert dieser Reihe größer ist als der Schwellenwert oder
. andernfalls eine '0' am Ausgang anzulegen sowie
- Mittel zur Gewinnung (3) der n nachfolgenden Abtastwerte des Eingangssignals.

7. Demodulator gemäß Anspruch 6,
dadurch gekennzeichnet, daß er zusätzlich Mittel zum Erfassen der Umhüllenden (1) umfaßt, um das periodische Signal aus dem modulierten Hilfsträger zu extrahieren.

8. Demodulator gemäß Anspruch 6,
dadurch gekennzeichnet, daß die Mittel zum Abtasten des Eingangssignals einen Analog-/Digitalwandler umfassen.

9. Demodulator gemäß Anspruch 6,
dadurch gekennzeichnet, daß die Mittel zum Synchronisieren der Abtastwerte des Eingangssignals, die Analysemittel und die Gewinnungsmittel, einen Digitalprozessor (3) umfassen.

10. Demodulator gemäß Anspruch 9, wobei der Digitalprozessor (3) am Ausgang ebenfalls ein Taktsignal abgibt, das gemäß der Abgabe der binären Ausgangswerte kadenziert ist.

## Claims

1. A demodulation process for RDS-type signals in which a broadcast signal subcarrier is modulated by a modulating signal carrying digital data, this modulation being an amplitude modulation of the subcarrier by a periodic signal of a predetermined frequency, the amplitude of the periodic signal at mid-period varying relative to a given threshold (5),
the process being characterized by the following steps:
(a) sampling (2) of the modulating signal at n times per said predetermined frequency,
(b) synchronization (11) of these samples of the modulating signal, by finding, for each series of n successive samples obtained, the sample corresponding to the start of a period of the said periodic signal,
(c) analysis (18, 19, 22) of this series of n samples thus synchronized, in order:
. to output (23) a '1' if the level of the central sample in this series is above the said threshold, or
. to output (24) a '0' if this is not the case, and
(d) obtaining the next n samples (14-16) of the modulating signal and returning to step (c).

2. The process of claim 1, wherein step (b) comprises the following sub-steps:
(b1) storage (10) of a series of n successive samples of the modulating signal,
(b2) analysis (18, 19, 22) of the initial, middle and final samples of this series,
(b3) passing to step (c) if the middle sample is above the said threshold (5) and if the initial and final samples (18, 19) are both below this threshold, or
(b4) if this is not the case (24), obtaining another sample and adding it to the n-1 last samples of the series of samples obtained in step (b1), and performance of step (b3) using this new series of n samples.

3. The process of claim 1, wherein step (c) also comprises a preliminary substep of detecting synchronization loss (20), requiring a return to step (a) if the initial or final samples of the said set of n samples is below the said threshold (18, 19).

4. The process of claim 1, wherein, at the same time as the samples of modulating signals are being obtained, a data clock signal is outputted by generating a pulse edge (15, 17) after obtaining the first n/2 samples and the last n/2 samples of each series of n synchronized samples.

5. The process of claim 1, wherein step (c) also comprises a preliminary step of dynamic determination of the said threshold, which is determined as a function of the amplitude of the highest-level sample of the first n/2 samples of the said series.

6. A demodulator for RDS-type signals, receiving as input a subcarrier of a broadcast signal modulated by a modulating signal carrying digital data, this modulation being an amplitude modulation of the subcarrier by a periodic signal of a predetermined frequency, the amplitude of the periodic signal at mid-period varying relative to a given threshold (5), outputting a binary data signal,
characterized by its comprising:
- means (2) of sampling the modulating signal at n times per predetermined frequency;
- means (3) of synchronizing the said modulating signal samples, by finding, for each series of n successive samples obtained, the sample corresponding to the start of a period of the said periodic signal,
- means (3) of analyzing this series of n samples thus synchronized, in order:
. to output a '1' if the level of the middle sample in this series is above the said threshold, or
. to output a '0' if this is not the case, and
- means of obtaining (3) the next n samples of the modulating signal.

7. The demodulator according to claim 6, characterized in that it also includes envelope detector means (1), in order to extract the said modulated signal from the subcarrier.

8. The demodulator according to claim 6, characterized in that the said modulating signal sampling means include an analogue/digital converter (2)

9. The demodulator according to claim 6, characterized in that the said modulating signal sample synchronization means, the said analytical means and the said sample-obtaining means include a digital processor (3).

10. The demodulator according to claim 9, in which the digital processor (3) also outputs a data clock signal in time with the outputting of binary values.
